# EUROPEAN PATENT APPLICATION

(11) **EP 2 821 134 A1**
(43) Date of publication of application: **07.01.2015**
(21) Application number: 13003400.2
(22) Date of filing: 04.07.2013
(51) Int. Cl.: B01J 19/00

(54) **A system and a method for the implementation of chemical, biological or physical reactions**

(71) Applicant: Technische Universität Kaiserslautern, 67663 Kaiserslautern (DE)
(72) Inventor: Ulber, Roland, 67663 Kaiserslautern (DE); Tippkötter, Nils, 67655 Kaiserslautern (DE); Al-Kaidy, Huschyar, 67663 Kaiserslautern (DE)
(74) Representative: Patentanwälte Dr. Keller, Schwertfeger

(57) **Abstract**

The invention relates to a system for the implementation of chemical, biological or physical reactions, consisting of
- one or more magnetic micro-reactors (13), each comprising a shell (3) made of hydrophobic magnetic nanoparticles encapsulating an aqueous core (2),
- a plane platform (1) comprising a surface (12) to receive the micro-reactors (13),
- a source (14) that generates a magnetic field above or underneath the platform (1) for manipulating the one or more hydrophobic magnetic micro-reactors (13), or for moving them along the surface (12) of the platform (1) from one position to another position, characterized in that the aqueous core (2) of the one or more magnetic micro-reactors (13) contains a reaction solution or buffer, and wherein the magnetic field generated by the source (14) correlates to a defined position on the surface of the platform (1).

## Description

The present invention relates to a novel system for the implementation of chemical, biological or physical reactions. The invention further comprises a method for carrying out such reactions by using magnetic micro-reactors that are composed of a shell made of hydrophobic magnetic nanoparticles encapsulating an aqueous core. The systems and methods of the invention can be used for the synthesis, analysis or detection of compounds, and are thus useful both in therapy and diagnosis.

Micro-reactors or micro-channel reactors are small compartments, in which chemical or physical processes can take place for the synthesis or analysis of compounds. Micro-fluidic devices usually allow for a better control of reaction conditions, provide improved safety and portability. Usually, the reactor systems are composed of mechanical elements of dimensions smaller than 2 mm. Such systems are described, for instance, in WO 2011/004822 A1 and DE 010 224 150 B4.

Another system described in EP 2 251 079 A1 comprises a planar micro-fluidic device with a plurality of inlets and at least one outlet, a holder and sealing means. This kind of devices, however, requires many efforts in construction and material, such as for the design of channels, valves or proper seals. It is therefore one goal in the prior art to simplify mechanical constructions in micro-fluidic systems by applying alternative technologies. A droplet-based micro-fluidic system can be considered as being one alternative (V. Srinivasan et al., Anal. Chim. Acta 2004, 507, 145). The droplets can be displaced, merged, mixed and separated on the chip without the use of external moving magnets or parts. Another embodiment relates to a micro-fluidic device operating at a planar surface instead of a closed channel network (Z. Guttenberg et al., Lab Chip 2005, 5, 308). One major drawback of these systems is the requirement to use oil in order to prevent evaporation of reaction agents and surface adsorption.

Furthermore, research has been directed to the transport of small amounts of liquid on a solid surface. For this purpose an aqueous liquid droplet was encapsulated with a hydrophobic powder (Mahadevan L. Non-stick water. Nature 2001;411:895-6). The resulting "liquid marbles" were found to behave similar to a soft solid, and show reduced adhesion to a solid surface (Aussillous P., Quéré D. Liquid marbles, Nature 2001; 411:924-7).

Liquid marbles have been applied for gas sensing (Tian J. et al., Liquid marble for gas sensing. Chem Commun 2010;46:4734-6). Furthermore, the potential of liquid marbles as micro-reactors, micro-pumps, sensors for pH, gas and water pollution has been suggested (Bormashenko E, Musin A. Revealing of water surface pollution with liquid marbles. Appl Surf Sci 2009;255:6429-31). The movement of liquid marbles by applying a two-dimensional magnetic manipulation of aqueous droplets suspended in silicon oil as a platform for on-chip bio-analysis has been described for superparamagnetic micro-particles (U. Lehmann et al., M.A.M. Gijs, Sens. Actuators B: Chem. 117(2006) 457; M. Shikida et al., Sens. Actuators B: Chem. 113 (2006) 563).

It was also found that liquid marbles can be manipulated by opening or closing them reversibly. In addition, the smooth movement of a magnetic liquid marble on a glass surface by placing a magnet underneath the surface has been investigated (Zhao Y et al., Magnetic liquid marbles; manipulation of liquid droplets using highly hydrophobic Fe3O4 nanoparticles. Adv Mater 2010;22:707). The liquid marbles were formed by rolling a water droplet on the super-hydrophobic Fe₃O₄ nanoparticles.

The movement of magnetic bodies in general by usage of a plurality of coils and a current controller is described, for instance, in WO 2010/034582 A1. The use of magnetic and electrical forces in combination to manipulate magnetic particles is subject of the US 8,293,089 B1, in which a magnet proximate to the substrate results in levitating the magnetic particles at a height above the substrate. WO 2010/091874 A1 describes a system and a method for a controlled manipulation of any number of magnetic particles in solution. Similar systems have been described in EP 2 396 118 A1, EP 2 327 147 A1, EP 1 916 032 A1.

The micro-fluidic systems described in the art require a high effort in construction and material due to the utilized complex structures such as channels, valves and seals. These constructions may be used for a directed movement and separation of liquids, but have clear limitations due to their small dimensions. Furthermore, the separation of compounds from catalytic reaction solutions can only be achieved with extensive effort.

Systems and methods that are based on liquid marbles or micro-droplets face the problem that without precautions a significant amount of liquid is lost during the application due to surface adsorption and evaporation. For this reason, such systems utilize a protective oil layer in order to insulate the reactive droplet from the environment. However, this kind of treatment bears the danger of contaminations originating from the oil phase.

It is therefore the object of the present invention to provide an improved and automatable system and a method that overcome the above limitations, and which is adaptable to simultaneously implement chemical, biological or physical reactions on a reaction platform.

This problem is solved by a system comprising the technical features of claim 1 and a method comprising the steps according to claim 13.

The present invention relates to a system for the implementation of chemical, biological or physical reactions, consisting of one or more magnetic micro-reactors, each comprising a shell made of hydrophobic magnetic nanoparticles encapsulating an aqueous core. The present invention further relates to a method for the implementation of such reactions, a screening method for identifying the presence of one or more biological or chemical substances and the use of the system for synthesis, analysis or detection of chemical or biological substances.

The system according to the present invention allows magnetic micro-reactors with a liquid core to move from a defined position on a plane platform to another predetermined position on the same platform in two-dimensional (2D) direction. In addition or alternatively, the shell of the micro-reactors can be manipulated from a closed position into an open position, for example to inject or withdraw reaction partners from the aqueous core. Finally, the micro-reactors can be fused in order to bring the both aqueous cores into contact with each other.

The term "micro-reactor" as used in the context of the present invention refers to a bead with spherical shape enclosing a fluid. Preferred magnetic nanoparticles used for the creation of the hydrophobic shell of the micro-reactor are composed of Fe₂O₃ or Fe₃O₄.

The system further comprises a plane platform with a hydrophobic surface to receive one or more magnetic micro-reactors. A preferred hydrophobic surface of the platform is made of fused silica, which is suitable for immobilisation of biomolecules such as antibodies, enzymes, chemical ligands or any other compound bearing functional groups.

The system further comprises a source that generates a magnetic field above or underneath the platform for manipulating the one or more hydrophobic magnetic micro-reactors, or for moving them along the surface of the platform from one pre-determined position to another position, preferably to an adjacent position. According to the present invention, the aqueous core of the one or more magnetic micro-reactors contains a reaction solution or buffer. The magnetic field generated by the source correlates to a defined position on the surface of the platform. Preferably, the positions on the platform are part of a matrix, wherein each position corresponds to an activatable magnetic field. By applying a number of magnetic fields at the defined positions on the platform, the magnetic micro-reactors are able to move along the surface from one to another position, depending where the specific magnetic field is activated. Preferably, the magnetic source is stationary, thus allowing a rapid movement of the micro-reactors over the hydrophobic surface of the platform. The activation of the magnetic fields can be controlled either electrically, pneumatically or mechanically. An electric activation preferably comprises the application of a current in the coil to generate a magnetic field at the indicated position. A mechanical activation preferably comprises the closer approximation of a permanent magnet towards the platform bearing the micro-reactors.

The source that generates the magnetic field can either be located underneath or above the platform to contact the movement of the micro-reactors. However, depending on the magnetic field, the micro-reactors, in particular their magnetic hydrophobic shell can be manipulated in order to open or to close the particles reversibly. In one embodiment, the aforementioned manipulation is carried out by moving the magnetic source perpendicularly to the surface of the platform. The applied magnetic force will attract the nanoparticles of the shell, thereby forming a pore in the micro-reactor on the opposite side. The size of the pore will mainly depend on the strength of the applied magnetic field. The formed pore can be used to inject or withdraw fluid from the exterior into or from the aqueous core of the micro-reactor. By low ending the strength of the applied magnetic field the shell of the micro-reactor will be re-formed and converted into a closed state.

Preferably, the source for generating the magnetic field(s) is one or more arrays of electric coils or pneumatic actors, arranged above or underneath the platform. The electric coils are supported by a mount, and each coil accommodates either a magnet or an iron core in order to generate a defined magnetic field corresponding to a pre-determined position on the platform.

For a controlled manipulation of the micro-reactors, the magnets are movable perpendicularly within the coils to the surface of the platform in different vertical positions.

In a further preferred embodiment, the magnets utilized in the present invention can be moved by hydraulic, pneumatic, electronic or mechanical means. A guiding track, for example, can allow the movement of the array of magnets above or below the platform.

Preferably, neodymium magnets are used in the coils of the present invention. The activation of the magnetic fields at the defined position is controlled by a control interface that allows a pre-selection and routing of the movements of the micro-reactors along the platform. For this purpose, the platform is divided into different fields (= matrix), each field corresponding to a defined position.

In a preferred embodiment, the electric coils are arranged above or underneath the platform either in a single layer or in two or more stacked layers. A stacked formation allows for an extensive vertical movement of the magnets relative to the plane platform at different vertical positions in order to control the degree of manipulation of the micro-reactors.

There are several ways by which the micro-reactors of the present invention can perform chemical, biological or physical reactions. In a first variant, the defined positions on the hydrophobic surface comprise areas with immobilized reaction partners attached thereto. For example, biological molecules, catalysts, compounds or substances such as ligands etc. can be immobilized on the hydrophobic surface by binding of reactive groups to the surface. Immobilization preferably takes places via common functional groups, including amines, thiols, carboxylic acids, and alcohols. Examples for immobilized ligands are antibodies, enzymes, inhibitors, lectins, receptors, nucleic acids, hormones or vitamins. These ligands can react with the respective counterpart in the aqueous core of the micro-reactor resulting in an antigen-antibody, protein-protein, aptamer-ligand, receptor-ligand or enzyme-substrate interaction. Molecules may be immobilized either passively through hydrophobic, ionic or covalent attachment through activated surface groups. It is one advantage of the present system that the reaction occurs rapidly and therefore allows the use of low concentrations of reagents for immobilization. Furthermore, the chemistry requires only little, if any, post-synthetic modification of ligands before immobilization to maximize the number of compounds that can be generated by solution or solid-phase synthesis and minimizes the costs of these reagents.

Furthermore, reaction solutions and products can be transported from one position to another position, following implementation of the reaction. The system of the present invention also allows for a separation of the reactants and products from the immobilisates.

In such an environment, a reaction can be started, for example, by moving the micro-reactor containing the aqueous core to the immobilized reaction partner at a pre-determined position. A reaction can also be started by bringing the reactive compound on the surface in contact with the aqueous core of the micro-reactor. For the purpose of this application, the term "reaction" shall be understood broadly and encompass any interaction of molecules, resulting in a modification of the reaction partners, either directly or indirectly.

In an alternative embodiment, a micro-reactor is already present at the pre-determined position, and another micro-reactor is moved to that position, thereby fusing the both micro-reactors and their reactive aqueous cores to a single micro-reactor.

By using the manipulation method, e.g. opening and closing of the particle shell, a reaction partner such as a counter ligand can be added to the aqueous core to initiate or terminate a chemical or biological reaction.

In a preferred embodiment, the hydrophobic magnetic nanoparticles are superhydrophobic nanoparticles coated with a fluorinated silane or an equivalent compound. The hydrophobicity has several advantages over mere hydrophobic shells. In particular, evaporation during the formation process is considerably decreased.

In an preferred embodiment, a control interface directly controls the activation of the magnetic fields, i.e. the magnetic field strength and the position of each magnet within the coils, or the current in the coils based on a given layout (matrix) comprising the total number of positions on the platform. A computer-controlled interface then allows the selection of a defined position and a controlled movement of the micro-reactor to that position. The computer-controlled process allows the simultaneous performance of several reactions following a pre-defined scheme or profile in an automated environment.

In a preferred embodiment, the system additionally comprises an injector apparatus that injects or withdraws fluid into or from the manipulated micro-reactors, respectively. Subsequently, the micro-reactors can be incubated at the respective reaction conditions, or moved to another position on the platform to receive further treatment.

In a preferred embodiment, the platform further comprises heating or cooling means for heating or cooling the micro-reactors at the defined positions on the surface of the platform. Heating or cooling can be achieved, for instance, by using heating elements, radiators or peltier elements. Alternatively, a nozzle can be arranged above or below the platform to guide a defined air flow to the micro-reactor on the platform. The system can further comprise measurement facilities, for analysing physical, chemical or biological reactions. For example, optics can be utilized for conducting measurements on the reactive micro-reactors.

The system according to the present invention can be used in synthesis, analytics, diagnostics or therapy. For example, antigene-antibody reactions, enzyme reactions, polymerized chain reactions (PCR) or aptamere amplifications can be applied using the system of the invention. Possible applications for the system include clinical diagnosis and biomedicine, medical veterinary and medical analysis, process control, such as fermentation control, food and drink analysis, bacterial and viral analysis, pharmaceutical and drug analysis, industrial effluent control, pollution control and monitoring, gas detection etc. More specifically, the system can be used for analysis of interactions of DNA or RNA with complementary strands, specific recognition of protein ligands by immobilized reaction partners, detection of virus capsids, bacteria, mammalian cells, adhesion of cells, liposomes and proteins, biocompatibility of surfaces, or formation and prevention of formation of biofilms.

The automation of the system of the invention allows the implementation of several simultaneous reactions. Therefore, the system and the method according to the present invention can be used for parallel screenings for compounds, substances or micro-organisms. The system and method can also be used for defining reaction conditions and for the evaluation of reaction parameters.

The movement conducted by the activation of magnetic fields on the platform is controllable. Only a small volume of reaction solution required to build the core of the micro-reactors. Reaction and screenings can be performed more rapidly and effortless as before with systems known from the prior art.

The method for implementation of chemical, biological or physical reactions according to the present invention comprises the steps of encapsulating a reaction solution or buffer in a shell made of hydrophobic magnetic nanoparticles to form one or more magnetic micro-reactors, providing the one or more magnetic micro-reactors on a plane platform comprising a hydrophobic surface to receive the micro-reactors, generating a magnetic field above or underneath the platform for manipulating the one or more hydrophobic magnetic micro-reactors or for moving them along the surface of the platform from one position to another position, bringing the aqueous core in contact with a reaction partner by opening or closing the magnetic micro-reactors and injecting the reaction partner to the aqueous core, or immobilizing the reaction partner at a defined position on the hydrophobic surface of the platform and moving the magnetic reactor to that position, or fusing two or more micro-reactors.

In a preferred embodiment, the micro-reactors are reacting with the immobilized reaction partner on the surface of the platform for a defined time and are then moved further to another position for reacting with a second or third reaction partner.

The invention also relates to a screening method for identifying the presents of one or more biological or chemical substances, comprising:
a. encapsulating an aqueous core with a ligand solved therein in a shell made of hydrophobic magnetic nanoparticles to form one or more magnetic micro-reactors,
b. providing the one or more magnetic micro-reactors on a plane platform comprising a hydrophobic surface to receive the micro-reactors,
c. generating a magnetic field above or underneath the platform for manipulating the one or more hydrophobic magnetic micro-reactors, or for moving them along the surface of the platform from one position to another position,
d. bringing the aqueous core in contact with a counter-ligand by
   i. opening or closing the magnetic micro-reactors and injecting the counter-ligand into the aqueous core, or
   ii. immobilising the counter-ligand at a defined position on the hydrophobic surface of the platform and moving the magnetic reactor to that position, or
   iii. fusing two or more micro-reactors containing the ligand and counter-ligand, respectively, to a single micro-reactor,
e. detecting the presence of the ligand and/or the counter-ligand by interaction of the ligand with the respective counter-ligand.

### Material and methods

### Synthesis of hydrophobic particles

The synthesis of superhydrophobic magnetite particles is performed by adding FeCl₃ hexahydrate and FeCl₂ tetrahydrate to a water/ethanol solution. To this mixture, a fluorinated silane (tridecafluorooctyltriethoxysilane) is added under vigorous stirring. In order to prevent a secondary oxidation of the magnetite particles, the synthesis takes place under an inert gas atmosphere (N₂). Subsequently, the solution is adjusted with NH₄OH to a pH of 8. After stirring for 24 h, the particles obtained are magnetically separated from the solution, washed three times with a water/ethanol solution, and dried at 60 °C. As a result of this synthesis of super hydrophobic particles, a total yield of 51 % (w/w) is reached. A measurement of the particle size distributions showed an average particle diameter of 0.1 to 20 pm. For the majority of applications, the particle size was adjusted to an average diameter of 3 µm. In addition, hydrophobic nanoparticles were used as a shell material.

### Preparation of micro-reactors

The formation of the micro-reactors is based on the different surface tension of core and shell. These differences cause the self-organization of the super hydrophobic magnetite particles around an aqueous droplet. In this case, an aqueous reaction solution (from 100 pL to about 150 µL) is brought in contact with the super hydrophobic particles. A thus manufactured micro-reactor with a volume of 10 µL has a contact angle of 158 °. As the volume of the micro-reactor increases, the contact angle to the surface decreases due to gravity. Through the movement of the droplet, the particles form a uniform shell around the reaction solution. On a typical micro-reactor with a volume of 5 µL, about 1•10⁻⁶ g of super hydrophobic particles attach.

### Immobilization of biomolecules

The immobilization on quartz glass carrier plates has been done with model enzymes (e. g. Laccase A). Before the immobilization on the carrier plate takes place, the carrier plate is freed from the chemically bound cations (sodium, potassium, calcium). Subsequently, the density of hydroxyl groups on the carrier plate is increased in order to bind as many biomolecules as possible. Finally, the functionalization of the carrier plate is performed with the desired chemical groups. These groups can be fluorine groups, which are applied with a fluorinated silane and give the carrier plate its hydrophobicity. Furthermore, carboxyl or amino groups can be added by appropriate silanizing reagents. The so functionalized surface areas serve as a binding site for biomolecules which can interact with a suitable linker. As typical activating linkers between the functionalized surface and the biomolecule, 1-ethyl-3-(3-dimethylaminopropyl) carbodiimide (EDC) or glutaraldehyde are used. By this functionalization and immobilization of the model enzyme Laccase A on the quartz glass plate, an activity of the immobilized enzyme in a non-mixed system of 9•10⁻⁶ U in an area of 3.14•10⁻⁶ m² could be determined.

The invention is further illustrated in the accompanying figures.
- Fig. 1: shows one embodiment using electric coils with movable neodymium magnets,
- Fig. 2: shows a second embodiment using two layers of coils with vertically movable magnets,
- Fig. 3: shows a third embodiment using ferrite cores within the coils,
- Fig. 4: shows a matrix with different areas for a micro-reactor movement.

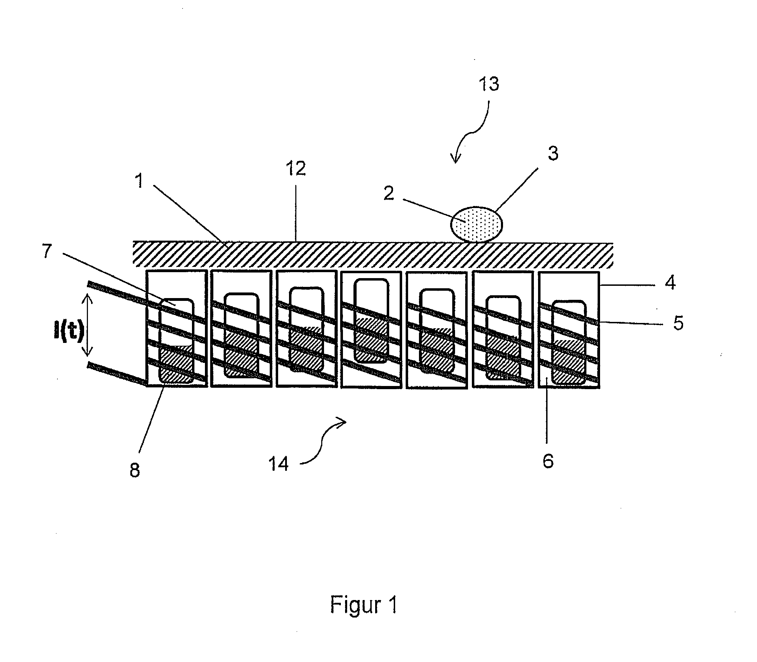

In Fig. 1, a system for the implementation of chemical, biological or physical reactions is shown. The system comprises one or more magnetic micro-reactors 13, which are sitting on a hydrophobic surface 12 (fused silica), which is part of a plane platform 1. The magnetic micro-reactors 13 are made of a shell 3 comprising hydrophobic magnetic nanoparticles that encapsulate an aqueous core 2. The aqueous core 2 of the micro-reactors 13 contains, for example, a reaction or buffer solution to carry out any chemical, biological or physical reaction.

Underneath the platform 1, electric coils 5, each containing a neodymium magnet 8 are arranged in a layer and supported by by one or more mounts 4. The electric coils 5 with the magnets 8 constitute a source 14 for generating magnetic fields underneath the platform 1. Alternatively, the source 14 can also be arranged above the platform 1 (not shown).

The magnets 8 are movable within the coils 5 in order to increase the magnetic force acting on the micro-reactors by moving them towards the platform 1. This brings the top 7 of the magnet 8 closer to the lower side of the platform 1 and hence the increases the magnetic force. The magnetic micro-reactor 13 can then be moved to another position by activating the magnetic field in an adjacent position.

Thus, a micro-reactor 13 can be manipulated by perpendicularly moving the magnet 8 within the coil 5 to the surface 12 of the platform 1. The applied magnetic force opens the shell 3 of the micro-reactor 13, which is visible as a pore on the top-side, and fluids such as liquid compounds can be injected or withdrawn from the pore of the micro-reactor 13. By moving the magnet 8 downwards again, the pore in the micro-reactor 13 will be closed. The micro-reactor 13 can then further be moved to an adjacent position by applying magnetic forces.

A chemical, biological or physical reaction can also take place by immobilizing the reaction partner at a defined position on the hydrophobic surface 12 of the platform 1 and moving the magnetic micro-reactor 13 to that position. Thereby, several reactions can be performed simultaneously. As a further alternative, two or more micro-reactors 13 can be fused together by moving their bodies to one field.

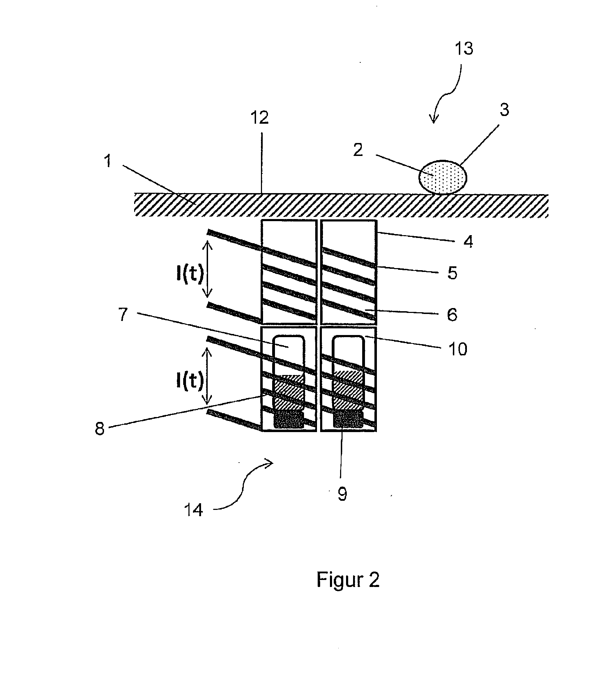

In Fig. 2, a further embodiment of the system of the present invention is shown. Underneath the platform 1, two layers of coils 5 are arranged. A spacer 9 is placed below the magnet 8, which preferably is a neodymium magnet. The mount 4 comprises two coils 5. By this arrangement, different vertical positions can be achieved, thus allowing a controlled three-dimensional manipulation of the micro-reactor 13. The magnets 8 can be moved perpendicularly within the coils 5 to the platform 1, so that the micro-reactors 13 can follow the respective gradients.

The utilized neodymium magnets 8 in this test system have a maximal magnetic field strength of approximately 0,43 T, a height of 12 mm and a diameter of 4 mm. The coils have a magnetic field strength of about 0,004 T, a height of 36 mm and a diameter of 10 mm. Through the use of stacked coils 5, the magnets 8 can occupy different vertical positions in the coil 5 and thus induce targeted acceleration as well as opening and closing of the shell 3 of the micro-reactor 13. Thus, in addition to the two-dimensional positioning, further manipulation in a third dimension, such as opening and closing of the micro-reactors 13, can be achieved by the system.

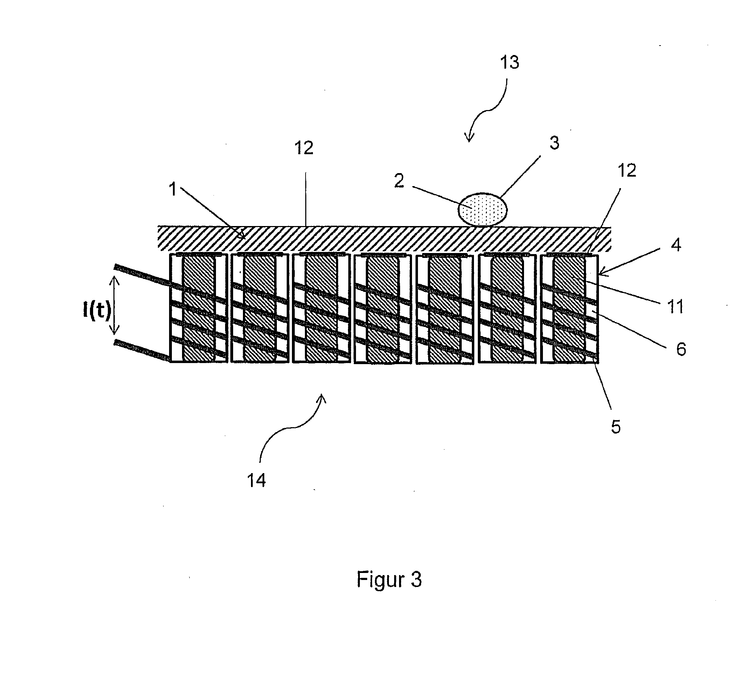

In Fig. 3, a further embodiment of the system was implemented with coils 5, which have a body made of aluminium and are provided with an iron core 11. The coils 5 in this test system generate a magnetic field strength of about 0,006 T, which can be increased with an iron core 11 to about 0,079 T. The coils in this example have a height of 37 mm and a diameter of 10 mm.

The manipulation of the micro-reactor 13 is based on a magnetic field for which again neodymium magnets 8 were used. By approaching a magnet from below, a micro-reactor 13 opens its shell partially and reversibly. The manipulation (e.g. opening and closing) of a micro-reactor can be effected both from above or from underneath the platform, depending on the arrangement of the magnets 8.

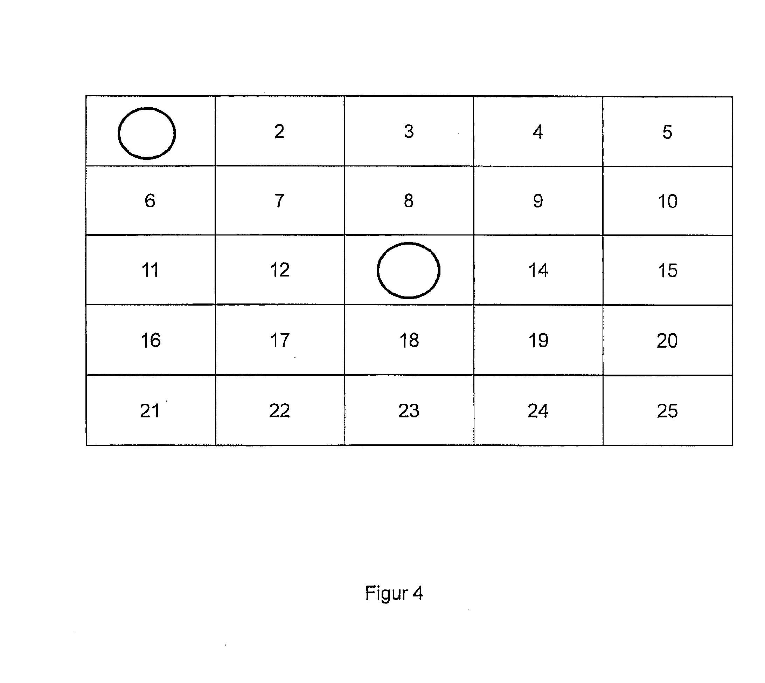

In Fig. 4, an example of a matrix with different positions 1 to 25, each corresponding to a specific position on the platform, is shown. If a micro-reactor 13 is positioned for example in field 1 of the platform 1, this field will be recognized as activated (indicated by a circle). The micro-reactor 13 can then be moved to field 13 of the matrix by applying the magnet fields at the different positions.

For the control of the platform and the coil matrix, and thus a specific movement and manipulation of one or more micro reactors, a software-controlled control interface has been developed. The electric control is based on microchip coil drivers, wherein each controls a dual coil stack. For each coil, the states 'off', 'positive flow' and 'negative flow' are possible reflecting the raising or lowering the permanent magnets. The coil drivers can submit a current of up to 300 mA to the coil using a bridge circuit. The control of the coil drivers is affected by a latch module, which again is controlled by an 8-bit communication bus.

With this kind of controller, several magnets can be moved up and down, i.e. a micro reactor can be 'parked' at the same number of different positions. That being said, the parking positions are dependent on the number of coils/magnets. With the controller and the platform using coils with iron cores, a micro reactor can be directed to a number of positions. The software interface is arranged as a checker board so that the desired position of the micro reactors can be selected and performed conveniently. The interface can be programmed to follow a pre-defined scheme or profile.

## Claims

1. A system for the implementation of chemical, biological or physical reactions, consisting of
- one or more magnetic micro-reactors (13), each comprising a shell (3) made of hydrophobic magnetic nanoparticles encapsulating an aqueous core (2),
- a plane platform (1) comprising a surface (12) to receive the micro-reactors (13),
- a source (14) that generates a magnetic field above or underneath the platform (1) for manipulating the one or more hydrophobic magnetic micro-reactors (13), or for moving them along the surface (12) of the platform (1) from one position to another position, **characterized in that** the aqueous core (2) of the one or more magnetic micro-reactors (13) contains a reaction solution or buffer, and wherein the magnetic field generated by the source (14) correlates to a defined position on the surface of the platform (1).

2. The system according to claim 1, wherein as source (14) one or more arrays of electric coils (5), each accommodating a magnet (8) are arranged above or underneath the platform (1) to generate individual magnet fields at defined positions at the platform (1), the magnets (8) being movable perpendicularly to the surface (12) of the platform (1) within the coils (5) in different vertical positions.

3. The system according to claim 2, wherein the electric coils (5) are arranged above or underneath the platform (1) either in a single layer or in two or more stacked layers.

4. The system according to anyone of claims 1 to 3, wherein heating and/or cooling elements are arranged above or below the platform for heating or cooling the micro-reactors at the defined position.

5. The system according to anyone of claims 1 to 4, wherein the defined positions on the surface (12) comprise areas with immobilized reaction partners attached thereto.

6. The system according to anyone of claims 1 to 5, wherein the surface is a hydrophobic surface (12) made of fused silica, and/or wherein the hydrophobic magnetic nanoparticles are super hydrophobic nanoparticles coated with a fluorinated silane or an equivalent compound.

7. The system according to anyone of claims 1 to 6, wherein measurement means are arranged above or below the platform at defined positions for analysis or detection of physical, chemical or biological reactions.

8. The system according to anyone of claims 1 to 7, wherein the platform (1) contains individual fields for the transfer of the micro-reactors (13), each field corresponding to a defined position on the platform (1), wherein the movement of the micro-reactors (13) to these fields and their manipulation is controlled by a control interface.

9. The system according to anyone of claims 1 to 8, wherein the system further comprises an injector apparatus that injects or withdraws fluid into or from the manipulated micro-reactors (13), respectively.

10. A system for the implementation of chemical, biological or physical reactions, consisting of
- one or more magnetic micro-reactors (13), each comprising a shell (3) made of hydrophobic magnetic nanoparticles encapsulating an aqueous core (2),
- a plane platform (1) comprising a surface (12) to receive the micro-reactors (13),
- a source (14) that generates a magnetic field above or underneath the platform (1) for manipulating the one or more hydrophobic magnetic micro-reactors (13), or for moving them along the surface (12) of the platform (1) from one position to another position, **characterized in that** the aqueous core (2) of the one or more magnetic micro-reactors (13) contains a reaction solution or buffer, and wherein the magnetic field generated by the source (14) correlates to a defined position on the surface of the platform (1), for use in synthesis, analysis or detection of chemical or biological substances.

11. The system according to claim 10, wherein the synthesis, analysis or detection of chemical or biological substances involves immobilized ligands, selected from the group consisting of antibodies, inhibitors, catalysts, lectins, receptors, nucleic acids, hormones or vitamins, interacting with the respective counter-ligand on the hydrophobic surface (12) of the platform (1).

12. The system according to claim 10 or 11, for use in therapy or diagnostics.

13. A method for the implementation of chemical, biological or physical reactions, comprising the steps of:
a. encapsulating a reaction solution or buffer as an aqueous core in a shell made of hydrophobic magnetic nanoparticles to form one or more magnetic micro-reactors,
b. providing the one or more magnetic micro-reactors on a plane platform comprising a surface to receive the micro-reactors,
c. generating a magnetic field above or underneath the platform for manipulating the one or more hydrophobic magnetic micro-reactors or for moving them along the surface of the platform from one position to another position,
d. bringing the aqueous core in contact with a reaction partner by
i. opening or closing the magnetic micro-reactors and injecting the reaction partner to the aqueous core, or
ii. immobilising the reaction partner at a defined position on the hydrophobic surface of the platform and moving the magnetic reactor to that position, or
iii. fusing two or more micro-reactors to a single micro-reactor.

14. The method according to claim 13, wherein the micro-reactors are reacting with the immobilised reaction partner on the surface of the platform for a defined period of time, and are then moved further to another position for reacting with a second or further reaction partner.

15. A screening method for identifying the presence of one or more biological or chemical substances, comprising:
a. encapsulating an aqueous core with a ligand solved therein in a shell made of hydrophobic magnetic nanoparticles to form one or more magnetic micro-reactors,
b. providing the one or more magnetic micro-reactors on a plane platform comprising a surface to receive the micro-reactors,
c. generating a magnetic field above or underneath the platform for manipulating the one or more hydrophobic magnetic micro-reactors, or for moving them along the surface of the platform from one position to another position,
d. bringing the aqueous core in contact with a counter-ligand by
i. opening or closing the magnetic micro-reactors and injecting the counter-ligand into the aqueous core, or
ii. immobilising the counter-ligand at a defined position on the surface of the platform and moving the magnetic reactor to that position, or
iii. fusing two or more micro-reactors containing the ligand and counter-ligand, respectively, to a single micro-reactor,
e. detecting the presence of the ligand and/or the counter-ligand by interaction of the ligand with the respective counter-ligand.
